# EUROPÄISCHE PATENTSCHRIFT

(11) **EP 2 795 856 B1**
(45) Veröffentlichungstag und Bekanntmachung des Hinweises auf die Patenterteilung: **18.05.2016**
(21) Anmeldenummer: 12816433.2
(22) Anmeldetag: 18.12.2012
(51) Int. Cl.: H04L 12/26, H04L 12/43

(54) **VERFAHREN ZUR ZEITRICHTIGEN BEOBACHTUNG VON TT ETHERNET NACHRICHTEN**
METHOD FOR MONITORING, AT THE CORRECT TIME, TT ETHERNET MESSAGES
PROCÉDÉ D'OBSERVATION, AU MOMENT CORRECT, DE MESSAGES TT ETHERNET

(30) Priorität: 19.12.2011 AT 18422011
(43) Veröffentlichungstag der Anmeldung: 29.10.2014
(73) Patentinhaber: FTS Computertechnik GmbH, 1040 Wien (AT)
(72) Erfinder: POLEDNA, Stefan, A-3400 Klosterneuburg (AT)
(74) Vertreter: Patentanwaltskanzlei Matschnig & Forsthuber OG
(86) Internationale Anmeldenummer: PCT/AT2012/050198
(87) Internationale Veröffentlichungsnummer: WO 2013/090963

(56) Entgegenhaltungen:
- EP-A2- 1 909 422
- WO-A1-2004/030275
- WO-A1-2011/123877

## Beschreibung

Die Erfindung betrifft ein Verfahren zur zeitrichtigen Beobachtung der von einem TTEthernet Switch (TTE Switch) in einem verteilten Echtzeitcomputersystem vermittelten TTEthernet (TT-) Nachrichten.

Weiters betrifft die Erfindung einen TTEthernet Switch (TTE Switch) für ein verteiltes Echtzeitcomputersystem, wobei das Echtzeitcomputersystem aus einer Vielzahl von Knotenrechner und TTE Switches besteht, und wobei der TTE Swich TTEthernet (TT-) Nachrichten in dem Echtzeitcomputersystem vermittelt.

Die Erfindung betrifft außerdem noch ein solches Echtzeitcomputersystem.

In einem verteilten Echtzeitsystem, das aus eine Vielzahl von Knotenrechnern besteht die ausschließlich mittels Nachrichten kommunizieren, kann das Schnittstellenverhalten eines Knotenrechners durch die interpretierten Nachrichten, die an dieser Schnittstelle empfangen und gesendet werden, beschrieben werden, siehe auch WO 2004/030275. Es ist deshalb von Vorteil, wenn alle Nachrichten, die an einer Schnittstelle auftreten, zeitrichtig beobachtet werden können, ohne das Zeitverhalten des Systems zu beeinflussen (non intrusive observation), wie in [4] angeführt. Die Erfahrung zeigt, dass ein nicht beobachtbarer Informationsfluss zwischen den Subsystemen eines großen Systems den kognitiven Aufwand der notwendig ist, um die Funktion eines Systems verstehen und ein Fehlverhalten erkennen zu können [6] erhöht.

Es ist eine Aufgabe der Erfindung, ein Verfahren sowie Hardware offenzulegen, mit welchen in einem verteilten Echtzeitsystem, in welchem die Knotenrechner mittels Ethernet Nachrichten in einem zeitgesteuerten Ethernet System (TTEthernet) kommunizieren, die auftretenden Nachrichten zeitrichtig beobachtet werden können, ohne dass das zeitliche Systemverhalten beeinflusst wird. Das TTEthernet ist dabei Gegenstand der Patente [2] und [3]. Der SAE TTEthernet Standard ist auf [8] erhältlich.

In einem konventionellen Ethernet System wird die zeitrichtige Beobachtung der Nachrichten dadurch erschwert, dass Nachrichten in den Zwischenspeichern der Ethernet Switches verzögert werden können und die exakten Zeitpunkte, zu welchen eine Nachricht weitergeleitet wird, nicht vorhersehbar sind. In einem zeitgesteuerten System, in dem wesentliche Aktionen vom Fortschreiten einer globalen Zeit abgeleitet werden, ist das Zeitverhalten vorhersehbar. Eine notwendige Voraussetzung für das korrekte Verhalten eines zeitgesteuerten Systems ist das Vorhandensein einer globalen Zeit in allen Subsystemen des Systems. Die Qualität der globalen Zeit wird durch die Präzision der Zeit, wie in [7, p.55] ausführlich erklärt, ausgedrückt. Es ist vorteilhaft, wenn in einem großen System die globale Zeit mit dem externen Zeitstandard TAI, der z.B. durch das GPS Signal verteilt wird, synchronisiert ist. Die Qualität der externen Synchronisation wird durch die Genauigkeit A (accuracy) ausgedrückt.

Mit der vorliegenden Erfindung wird die oben genannte Aufgabe dadurch gelöst, dass erfindungsgemäß vorgesehen ist, dass der TTE Switch über eine globale Zeit mit der Präzision P und der Genauigkeit A verfügt, und wobei der TTE Switch über eine Vielzahl von *Vermittlungskanälen* und einen oder mehrere *Beobachtungskanäle* verfügt, und wobei im TTE Switch eine *Selektionsdatenstruktur* enthalten ist, die angibt, welche TT-Nachrichtenklassen beobachtet werden sollen, und wobei von einer TT Nachricht, die einer zur Beobachtung ausgewählten TT-Nachrichtenklasse angehört, im TTE Switch eine Kopie gebildet wird, die vom TTE Switch über einen *Beobachtungskanal* an einen *Beobachtungsknoten* gesendet wird, und wobei der TTE Switch anschließend autonom eine ET-Nachricht, in der eine *Kennung* und der *exakte Sendezeitpunkt* der beobachteten TT-Nachricht enthalten sind, über einen *Beobachtungskanal* an einen Beobachtungsknoten sendet.

Das hier offengelegte Verfahren sieht (ebenso wie der erfindungsgemäße Switch) vor, dass ein time-triggered Ethernet (TTE) Switch eine zur Beobachtung ausgewählte Nachricht kopiert und über einen Beobachtungskanal an einen Beobachtungsknoten sendet. Da die kopierte Nachricht vor dem Senden über den Beobachtungskanal verzögert werden kann und der Zeitpunkt des Sendens der kopierten Nachricht an den Beobachtungsknoten nicht dem Zeitpunkt entspricht, zu dem die zur Beobachtung ausgewählte TT Nachricht an den Empfänger weitergeleitet wurde, sendet der TTE Switch unmittelbar nach dem Senden der kopierten Nachricht eine weitere Nachricht, in der eine Nachrichtenkennung der kopierten Nachricht und ein Zeitstempel enthalten sind, der den Zeitpunkt des Sendens der zur Beobachtung ausgewählte Nachricht an den in der Nachricht enthaltenen Empfänger angibt. Diese weitere Nachricht wird vom TTE Switch autonom generiert. Somit kann ein Beobachtungsknoten alle zur Beobachtung ausgewählten Nachrichten, die von den verschiedenen TTE Switches empfangen werden, zeitlich genau ordnen.

Das Problem der Beobachtung von Nachrichten, die zwischen den Subsystemen eines großen Systems ausgetauscht werden, wird in einigen Patenten behandelt. So wird in [1] (US 5,793,753. Hershey, et al.. Telecommunications network management observation and response system. Granted Aug. 11, 1998) ein Verfahren offengelegt, wie in einem großen Telekommunikationssystem der Nachrichtenverkehr beobachtet werden kann, ohne den Nachrichtenverkehr zeitlich zu beeinflussen (Verhinderung des probe effects). Auf das Problem der zeitrichtigen Beobachtung wird nicht eingegangen. Die US Patentanmeldung [4] (Non-intrusive debugging framework for parallel software based on super multi-core) legt ein umfassendes Beobachtungs- und Debugging System in einem Multicore System-of- Chip offen. Die Innovation in diesem System ist ebenfalls die Verhinderung des probe effects. Die US Patentanmeldung [5] (Method and circuit arrangement for the monitoring and management of data traffic in a communication system with several communication nodes.) hat die Beobachtung des Nachrichtenverkehrs in einem Bus-System zum Inhalt. In einem Bus System tritt das Problem, das in der vorliegenden Patentschrift behandelt wird, nicht auf, da der Bus keine Nachrichten speichern kann.

Die vorliegende Erfindung legt ein Verfahren offen, wie die zeitrichtige Beobachtung von Ethernet Nachrichten in einem großen verteilten Echtzeitsystem realisiert werden kann. Um die nicht vorhersehbare Verzögerung von Nachrichten in den Speichern eines Ethernet Switches auszuschalten wird zusätzlich zu einer zur Beobachtung ausgewählten Nachricht im Switch eine weitere Nachricht generiert, die exakt angibt, wann die beobachtete Nachricht den Ethernet Switch verlassen hat.

Weitere vorteilhafte Ausgestaltungen des erfindungsgemäßen Verfahrens und des erfindungsgemäßen Switches sind im Folgenden beschrieben:
Von Vorteil ist es, wenn die von dem TTE Switch autonom gebildete ET-Nachricht nach einer Vielheit (Vielzahl) von zur Beobachtung ausgewählten TT-Nachrichten gesendet wird, wobei die ET-Nachricht im Datenfeld die Kennungen und die exakten Sendezeitpunkte aller die Vielheit bildenden TT-Nachrichten enthält.

Zweckmäßig kann es sein, wenn die *Selektionsdatenstruktur* dynamisch in den TTE Switch geladen wird.

Ebenso kann es günstig sein, wenn eine Änderung der *Selektionsdatenstruktur* durch kryptographische Protokolle gesichert ist.

Außerdem ist es von Vorteil, wenn neben den TT-Nachrichten auch ET-Nachrichten, die vom TTE Switch vermittelt werden, zur Beobachtung ausgewählt werden können.

Zweckmäßig ist es, wenn der Beobachtungskanal eine höhere Bandbreite unterstützt als die Vermittlungskanäle.

Günstig kann es sein, wenn alle von der Zeit abgeleiteten Sendeereignisse *sparse events* darstellen.

Schließlich ist es noch von Vorteil, wenn jede TT-Nachricht ein *Parameterfeld* enthält, das von einem Sender der Nachricht den Wert TRUE oder FALSE zugewiesen bekommt, und wobei eine Nachricht, in der das Parameterfeld den Wert TRUE enthält, von dem TTE Switch kopiert wird und an den Beobachtungskanal gesendet wird, und wobei eine Nachricht in der das Parameterfeld den Wert FALSE enthält, von dem TTE Switch nicht an den Beobachtungskanal gesendet wird.

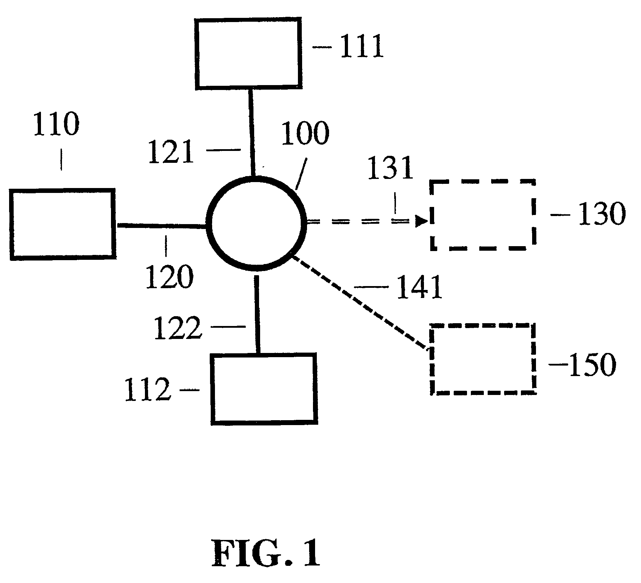

Die vorliegende Erfindung wird an Hand der folgenden Zeichnung Figur 1 erklärt. Diese Zeichnung zeigt die Struktur eines Verteilten Echtzeitsystems mit drei Verarbeitungsknoten, einem Beobachtungsknoten und einem Konfigurationsknoten.

Das in Figur 1 dargestellte verteilte Echtzeitcomputersystem besteht aus den drei Knotenrechnern 110, 111, 112 die mit den drei Vermittlungskanälen 120, 121, 122 mit dem TTE Switch 100 verbunden sind. Der Beobachtungskanal 131 verbindet den TTE Switch 100 mit dem Beobachtungsknoten 130. Der Vermittlungskanal 141 verbindet den TTE Switch 100 mit dem Konfigurationsknoten 150.

Im TTE Switch 100 ist eine Selektionsdatenstruktur enthalten, die angibt, welche TT (time-triggered) Nachrichtenklassen beobachtet werden sollen. Eine TT Nachrichtenklasse wird durch eine Folge von periodischen zeitgesteuerten Nachrichten, die strukturell identisch sind, gebildet. Eine TT Nachrichtenklasse kann durch ihre geplante Periode und ihr offset identifiziert werden. Eine einzelne Nachricht einer TT-Nachrichtenklasse kann durch den geplanten Sendezeitpunkt identifiziert werden. Alternativ kann jede einzelne TT Nachricht durch den Header der TTEthernet Nachricht und den Zeitpunkt des Sendens identifiziert werden.

Die Selektionsdatenstruktur im TTE Switch 100 kann vom Konfigurationsknoten 150 aus dynamisch geändert werden. Um die Authentizität und Integrität einer solchen Änderung sicherzustellen, kann der Datenverkehr zwischen dem Konfigurationsknoten 150 und dem TTE Switch 100 durch bekannte kryptographische Protokolle gesichert werden (siehe, z.B. [7, p.141]).

In einem großen verteilten Echtzeitsystem kann eine Vielzahl von Knotenrechnern über einer Vielzahl von TTE Switches Nachrichten austauschen. Da in allen TT Switches eine globale Zeitbasis mit der Präzision P und der Genauigkeit A verfügbar ist, ist es möglich die von den unterschiedlichen TTE Switches generierten Zeitstempel global zu ordnen. Wenn die Sendeereignisse sparse events darstellen (siehe [7.p.62]), so lassen sich alle Nachrichten im gesamten System konsistent ordnen.

Wenn in einem TTE Switch viele Nachrichtenklassen zur Beobachtung ausgewählt werden, so kann die Bandbreite des Beobachtungskanals nicht ausreichen, um alle beobachteten Nachrichten an den Beobachtungsknoten zu senden. Erfindungsgemäß ist es daher sinnvoll, die Bandbreite des Beobachtungskanals größer auszulegen als die Bandbreite der Vermittlungskanäle. Z.B. kann die Bandbreite der Vermittlungskanäle 100 Mbit/sec betragen, die Bandbreite des Beobachtungskanals hingegen 1000 Mbit/sec. Alternativ können auch mehrere Beobachtungskanäle in einem einzigen TTE Switch konfiguriert werden.

In der im TTE Switch 100 enthaltenen Selektionsdatenstruktur können auch Standard Ethernet Nachrichten, das sind ET (event-triggered) Nachrichten angeführt sein, die zu beobachten sind. Dies können auch Ethernet-Nachrichten die entsprechend höherer Protokollschichten, wie ARINC 664 oder IEEE 801.1 AV (audio video bridging) interpretiert werden betreffen. Diese ET Nachrichten können z.B. über den in jeder Ethernet Nachricht enthaltenem Header identifiziert werden. Alternative kann auch im Datenfeld einer Ethernet Nachricht ein Parameterfeld eingefügt werden, das mit den Werten TRUE oder FALSE belegt ist. Wenn der Wert dieses Parameterfeld TRUE enthält, so ist die Nachricht zu beobachten. Wenn der Wert dieses Parameterfeld FALSE enthält, so ist die Nachricht nicht zu beobachten.

Das beschriebene Beobachtungsverfahren kann sowohl in Software, wie auch in einem FPGA Chip, wie auch in einem ASIC Chip direkt in der Hardware realisiert werden.

Die hier vorgetragene detaillierte Beschreibung der Erfindung stellt nur eine von vielen Realisierungsmöglichkeiten dar.

### Zitierte Literatur:

[1] US 5,793,753. Hershey, et al.. Telecommunications network management observation and response system. Granted Aug. 11, 1998
[2] US 7,839,868. Kopetz, H.. Communication method and system for the transmission of time-driven and event-driven Ethernet messages. Granted November 23, 2010.
[3] US 7,979,247 Angelow, et al.. Multirouter for time-controlled communication system. Granted Aug. 23, 2011.
[4] US Pat Application 20110307741. Chen T.F.. Non-intrusive debugging framework for parallel software based on super multi-core.
[5] US Pat Application 20050094674. Zinke, et al.. Method and circuit arrangement for the monitoring and management of data traffic in a communication system with several communication nodes.
[6] Hmelo-Silver, C.E. & M.G. Pfeffer.. Comparing Expert and Novice Understanding of a Complex System from the Perspective of Structures, Behaviors, and Functions. Cognitive Science, Elsevier, Vol. 28. (pp. 127-138). 2004.
[7] Kopetz, H. Real-Time Systems, Design Principles for Distributed Embedded Applications. Springer Verlag. 2011.
[8] SAE Standard von TT Ethernet. URL: http://standards.sae.org/as6802

## Patentansprüche

1. Verfahren zur zeitrichtigen Beobachtung der von einem TTEthernet Switch (TTE Switch) in einem verteilten Echtzeitcomputersystem vermittelten TTEthernet- (TT-) Nachrichten, **dadurch gekennzeichnet, dass** der TTE Switch über eine globale Zeit mit der Präzision P und der Genauigkeit A verfügt, und wobei der TTE Switch über eine Vielzahl von *Vermittlungskanälen* und einen oder mehrere *Beobachtungskanäle* verfügt, und wobei im TTE Switch eine *Selektionsdatenstruktur* enthalten ist, die angibt, welche TT-Nachrichtenklassen beobachtet werden sollen, und wobei von einer TT Nachricht, die einer zur Beobachtung ausgewählten TT-Nachrichtenklasse angehört, im TTE Switch eine Kopie gebildet wird, die vom TTE Switch über einen *Beobachtungskanal* an einen *Beobachtungsknoten* gesendet wird, und wobei der TTE Switch anschließend autonom eine event-triggered Nachricht, nach Folgend ET-Nachricht genannt, in der eine *Kennung* und der *exakte Sendezeitpunkt* der beobachteten TT-Nachricht enthalten sind, über einen *Beobachtungskanal* an einen Beobachtungsknoten sendet.

2. Verfahren nach Anspruch 1, **dadurch gekennzeichnet, dass** die von dem TTE Switch autonom gebildete ET-Nachricht nach einer Vielheit von zur Beobachtung ausgewählten TT-Nachrichten gesendet wird, wobei die ET-Nachricht im Datenfeld die Kennungen und die exakten Sendezeitpunkte aller die Vielheit bildenden TT-Nachrichten enthält.

3. Verfahren nach Anspruch 1 oder 2, **dadurch gekennzeichnet, dass** die *Selektionsdatenstruktur* dynamisch in den TTE Switch geladen wird.

4. Verfahren nach einem der Ansprüche 1 bis 3, **dadurch gekennzeichnet, dass** eine Änderung der *Selektionsdatenstruktur* durch kryptographische Protokolle gesichert ist.

5. Verfahren nach einem der Ansprüche 1 bis 4, **dadurch gekennzeichnet, dass** neben den TT-Nachrichten auch ET-Nachrichten, die vom TTE Switch vermittelt werden, zur Beobachtung ausgewählt werden können.

6. Verfahren nach einem der Ansprüche 1 bis 5, **dadurch gekennzeichnet, dass** der Beobachtungskanal eine höhere Bandbreite unterstützt als die Vermittlungskanäle.

7. Verfahren nach einem der Ansprüche 1 bis 6, **dadurch gekennzeichnet, dass** alle von der Zeit abgeleiteten Sendeereignisse *sparse events* darstellen.

8. Verfahren nach einem der Ansprüche 1 bis 7, **dadurch gekennzeichnet, dass** jede TT-Nachricht ein *Parameterfeld* enthält, das von einem Sender der Nachricht den Wert TRUE oder FALSE zugewiesen bekommt, und wobei eine Nachricht, in der das Parameterfeld den Wert TRUE enthält, von dem TTE Switch kopiert wird und an den Beobachtungskanal gesendet wird, und wobei eine Nachricht in der das Parameterfeld den Wert FALSE enthält, von dem TTE Switch nicht an den Beobachtungskanal gesendet wird.

9. TTEthernet Switch (TTE Switch) für ein verteiltes Echtzeitcomputersystem, wobei das Echtzeitcomputersystem aus einer Vielzahl von Knotenrechner und TTE Switches besteht, und wobei der TTE Swich TTEthernet (TT-) Nachrichten in dem Echtzeitcomputersystem vermittelt, **dadurch gekennzeichnet dass** der TTE Switch über eine globale Zeit mit der Präzision P und der Genauigkeit A verfügt, und wobei der TTE Switch über eine Vielzahl von *Vermittlungskanälen* und einen oder mehrere *Beobachtungskanäle* verfügt, und wobei im TTE Switch eine *Selektionsdatenstruktur* enthalten ist, die angibt, welche TT-Nachrichtenklassen beobachtet werden sollen, und wobei von einer TT Nachricht, die einer zur Beobachtung ausgewählten TT-Nachrichtenklasse angehört, im TTE Switch eine Kopie gebildet wird, die vom TTE Switch über einen *Beobachtungskanal* an einen *Beobachtungsknoten* gesendet wird, und wobei der TTE Switch anschließend autonom eine event-triggered Nachricht, nach Folgend ET-Nachricht genannt, in der eine *Kennung* und der *exakte Sendezeitpunkt* der beobachteten TT-Nachricht enthalten sind, über einen *Beobachtungskanal* an einen Beobachtungsknoten sendet.

10. TTE Switch nach Anspruch 9, **dadurch gekennzeichnet, dass** die von dem TTE Switch autonom gebildete ET-Nachricht nach einer Vielheit von zur Beobachtung ausgewählten TT-Nachrichten gesendet wird, wobei die ET-Nachricht im Datenfeld die Kennungen und die exakten Sendezeitpunkte aller die Vielheit bildenden TT-Nachrichten enthält.

11. TTE Switch nach Anspruch 9 oder 10, **dadurch gekennzeichnet, dass** die *Selektionsdatenstruktur* dynamisch in den TTE Switch geladen wird.

12. TTE Switch nach einem der Ansprüche 9 bis 11, **dadurch gekennzeichnet, dass** eine Änderung der *Selektionsdatenstruktur* durch kryptographische Protokolle gesichert ist.

13. TTE Switch nach einem der Ansprüche 9 bis 12, **dadurch gekennzeichnet, dass** neben den TT-Nachrichten auch ET-Nachrichten, die vom TTE Switch vermittelt werden, zur Beobachtung ausgewählt werden können.

14. TTE Switch nach einem der Ansprüche 9 bis 13, **dadurch gekennzeichnet, dass** der Beobachtungskanal eine höhere Bandbreite unterstützt als die Vermittlungskanäle.

15. TTE Switch nach einem der Ansprüche 9 bis 14, **dadurch gekennzeichnet, dass** alle von der Zeit abgeleiteten Sendeereignisse *sparse events* darstellen.

16. TTE Switch nach einem der Ansprüche 9 bis 15, **dadurch gekennzeichnet, dass** jede TT-Nachricht ein *Parameterfeld* enthält, das von einem Sender der Nachricht den Wert TRUE oder FALSE zugewiesen bekommt, und wobei eine Nachricht, in der das Parameterfeld den Wert TRUE enthält, von dem TTE Switch kopiert wird und an den Beobachtungskanal gesendet wird, und wobei eine Nachricht in der das Parameterfeld den Wert FALSE enthält, von dem TTE Switch nicht an den Beobachtungskanal gesendet wird.

17. Echtzeitcomputersystem umfassend eine einer Vielzahl von Knotenrechnern und TTE Switches, umfassend zumindest einen TTE Switch nach einem der Ansprüche 9 bis 16.

18. Echtzeitcomputersystem nach Anspruch 17, **dadurch gekennzeichnet, dass** zwei oder mehrere TTE Switches Beobachtungskanäle unterstützen, wobei die Beobachtungskanäle der TTE Switches mit einem oder mehreren Beobachtungsknoten verbunden sind.

19. Verteilte Echtzeitcomputerarchitektur, **dadurch gekennzeichnet, dass** in einem verteilten Echtzeitcomputersystem nach Anspruch 17 oder 18, welches aus einer Vielzahl von Knotenrechnern und TTE Switches gebildet wird, und in welchem zwei oder mehrere TTE Switches Beobachtungskanäle unterstützen, die Beobachtungskanäle der TTE Switches mit einem oder mehreren Beobachtungsknoten verbunden sind.

## Claims

1. Method for the time-correct monitoring of TTEthernet (TT) messages transmitted by a TTEthernet switch (TTE switch) in a distributed real-time computer system **characterized in that** the TTE switch is a equipped with a global time with the precision P and the accuracy A, and whereby the TTE switch contains a plurality of *communication channels* and one or multiple *monitoring channels,* and whereby the TTE switch contains a *selection data structure* indicating which TT message classes shall be monitored, and whereby in the TTE switch a copy of a TT message belonging to the selected message class is generated, which is sent by the TTE switch via a *monitoring channel* to a *monitoring node,* and wherein the TTE switch subsequently autonomously sends an event-triggered message, in the following called ET message, containing an *identifier* and the *exact time of transmission* of the monitored TT message via a *monitoring channel* to a monitoring node.

2. Method according to claim 1 **characterized in that** the ET message autonomously generated by the TTE switch is sent after a multiplicity of TT messages selected to be monitored, whereby the data field of the ET message contains the identifiers and the exact times of transmission of all TT messages creating the multiplicity.

3. Method according to claim 1 or 2 **characterized in that** the selection data structure is loaded dynamically into the TTE switch.

4. Method according to claim 1 to 3 **characterized in that** a change of the selection data structure is secured by cryptographic protocols.

5. Method according to one of claims 1 to 4 **characterized in that** in addition to the TT messages, ET messages being transmitted by the TTE switch can also be selected for monitoring.

6. Method according to one of claims 1 to 5 **characterized in that** the monitoring channel supports a higher bandwidth than the communication channels.

7. Method according to one of claims 1 to 6 **characterized in that** all timederived transmission events represent *sparse events.*

8. Method according to one of claims 1 to 7 **characterized in that** every TT message contains a parameter field to which a value of TRUE or FALSE is assigned by a sender, and wherein a message with a parameter field value of TRUE is copied by the TTE switch and sent to the monitoring channel, and wherein a message with a parameter field value of FALSE is not sent by the TTE switch to the monitoring channel.

9. TTEthernet switch (TTE switch) for a distributed real-time computer system, wherein the distributed real-time computer system consists of a plurality of node computers and TTE switches, and wherein the TTE switch transmits TTEthernet (TT) messages within the distributed real-time computer system **characterized in that** the TTE switch is equipped with a global time with the precision P and the accuracy A, and whereby the TTE switch exhibits a plurality of *communication channels* and one or multiple *monitoring channels,* and whereby the TTE switch contains a *selection data structure* indicating which TT message classes shall be monitored, and whereby in the TTE switch a copy of a message belonging to the selected message class is generated, which is sent by the TTE switch via a *monitoring channel* to a *monitoring node,* and wherein the TTE switch subsequently autonomously sends an event-triggered message, in the following called ET message, containing an *identifier* and the *exact time of transmission* of the monitored TT message via a *monitoring channel* to a monitoring node.

10. TTE switch according to claim 9 **characterized in that** the ET message autonomously generated by the TTE switch is sent after a multiplicity of TT messages selected to be monitored, whereby the data field of the ET message contains the identifiers and the exact times of transmission of all TT messages creating the multiplicity.

11. TTE switch according to claim 9 or 10 **characterized in that** the *selection data structure* is loaded dynamically into the TTE switch.

12. TTE switch according to one of claims 9 to 11 **characterized in that** a change of the *selection data structure* is secured by cryptographic protocols.

13. TTE switch according to one of claims 9 to 12 **characterized in that** in addition to the TT messages, ET messages being transmitted by the TTE switch can also be selected for monitoring.

14. TTE switch according to one of claims 9 to 13 **characterized in that** the monitoring channel supports a higher bandwidth than the transmission channels.

15. TTE switch according to one of claims 9 to 14 **characterized in that** all time-derived transmission events represent *sparse events.*

16. TTE Switch according to one of claims 9 to 15 **characterized in that** every TT message contains a *parameter field* to which a value of TRUE or FALSE is assigned by a sender, and wherein a message with a parameter field value of TRUE is copied by the TTE switch and sent to the monitoring channel, and wherein a message with a parameter field value of FALSE is not sent by the TTE switch to the monitoring channel.

17. Real-time computer system, comprising a plurality of node computers and TTE switches, comprising at least one TTE switch according to any of claims 9 to 16.

18. Real-time computer system according to claim 17 **characterized in that** two or multiple TTE switches support monitoring channels, whereby the monitoring channels of the TTE switches are connected to one or multiple monitoring nodes.

19. Distributed real-time computer architecture **characterized in that** in a distributed real-time computer system according to claim 17 or 18 composed of a multiplicity of node computers and TTE switches and in which two or multiple TTE switches support monitoring channels, the monitoring channels of the TTE switches are connected to one or multiple monitoring nodes.

## Revendications

1. Procédé d'observation, au moment correct, des messages TTEthernet (TT) transmis dans un système informatique réparti en temps réel par un commutateur TTEthernet (commutateur TTE), **caractérisé par le fait que** le commutateur TTE dispose d'une horloge globale ayant la précision P et l'exactitude A, et le commutateur TTE disposant d'une pluralité de *canaux de transmission* et d'un ou plusieurs *canaux d'observation,* et une *structure de données de sélection* étant contenue dans le commutateur TTE, laquelle indique quelles classes de messages TT doivent être observées, et une copie étant formée dans le commutateur TTE, à partir d'un message TT qui appartient à une classe de messages TT choisie pour l'observation, laquelle copie est envoyée à un *noeud d'observation,* par le commutateur TTE, par l'intermédiaire d'un *canal d'observation,* et le commutateur TTE envoyant ensuite, de manière autonome, à un noeud d'observation, par l'intermédiaire d'un *canal d'observation,* un message déclenché par un évènement, ci-après dénommé message ET, message dans lequel sont contenus une *identification* et l'instant *exact d'émission* du message TT observé.

2. Procédé selon la revendication 1, **caractérisé par le fait que** le message ET formé de manière autonome par le commutateur TTE est envoyé après une multiplicité de messages TT choisis pour l'observation, le message ET contenant dans le champ de données les identifications et les instants exacts d'émission de tous les messages TT formant la multiplicité.

3. Procédé selon l'une des revendications 1 ou 2, **caractérisé par le fait que** la *structure de données de sélection* est chargée dynamiquement dans le commutateur TTE.

4. Procédé selon l'une des revendications 1 à 3, **caractérisé par le fait qu**'une modification de la *structure de données de sélection* est sécurisée par des protocoles cryptographiques.

5. Procédé selon l'une des revendications 1 à 4, **caractérisé par le fait qu**'en plus des messages TT, également des messages ET, lesquels sont transmis par le commutateur TTE, peuvent être choisis pour l'observation.

6. Procédé selon l'une des revendications 1 à 5, **caractérisé par le fait que** le canal d'observation supporte une bande passante plus élevée que les canaux de transmission.

7. Procédé selon l'une des revendications 1 à 6, **caractérisé par le fait que** tous les événements d'émission dérivés en temps représentent des *événements clairsemés.*

8. Procédé selon l'une des revendications 1 à 7, **caractérisé par le fait que** chaque message TT contient un *champ de paramètre* auquel est assignée la valeur VRAI ou FAUX par un expéditeur du message, et un message dans lequel le champ de paramètre contient la valeur VRAI étant copié par le commutateur TTE et étant envoyé au canal d'observation, et un message dans lequel le champ de paramètre contient la valeur FAUX n'étant pas envoyé au canal d'observation par le commutateur TTE.

9. Commutateur TTEthernet (commutateur TTE) pour un système informatique réparti en temps réel, le système informatique en temps réel comportant une pluralité d'ordinateurs de noeud et de commutateurs TTE, et le commutateur TTE transmettant des messages TTEthernet (TT) dans le système informatique en temps réel, **caractérisé par le fait que** le commutateur TTE dispose d'une horloge globale ayant la précision P et l'exactitude A, et le commutateur TTE disposant d'une pluralité de *canaux de transmission* et d'un ou plusieurs *canaux d'observation,* et une *structure de données de sélection* étant contenue dans le commutateur TTE, laquelle indique quelles classes de messages TT doivent être observées, et une copie étant formée dans le commutateur TTE, à partir d'un message TT qui appartient à une classe de messages TT choisie pour l'observation, laquelle copie est envoyée à un *noeud d'observation,* par le commutateur TTE, par l'intermédiaire d'un *canal d'observation,* et le commutateur TTE envoyant ensuite, de manière autonome, à un noeud d'observation, par l'intermédiaire d'un *canal d'observation,* un message déclenché par un évènement, ci-après dénommé message ET, message dans lequel sont contenus une *identification* et l'instant *exact d'émission* du message TT observé.

10. Commutateur TTE selon la revendication 9, **caractérisé par le fait que** le message ET formé de manière autonome par le commutateur TTE est envoyé après une multiplicité de messages TT choisis pour l'observation, le message ET contenant dans le champ de données les identifications et les instants exacts d'émission de tous les messages TT formant la multiplicité.

11. Commutateur TTE selon l'une des revendications 9 ou 10, **caractérisé par le fait que** la *structure de données de sélection* est chargée dynamiquement dans le commutateur TTE.

12. Commutateur TTE selon l'une des revendications 9 à 11, **caractérisé par le fait qu**'une modification de la *structure de données de sélection* est sécurisée par des protocoles cryptographiques.

13. Commutateur TTE selon l'une des revendications 9 à 12, **caractérisé par le fait qu**'en plus des messages TT, également des messages ET, lesquels sont transmis par le commutateur TTE, peuvent être choisis pour l'observation.

14. Commutateur TTE selon l'une des revendications 9 à 13, **caractérisé par le fait que** le canal d'observation supporte une bande passante plus élevée que les canaux de transmission.

15. Commutateur TTE selon l'une des revendications 9 à 14, **caractérisé par le fait que** tous les événements d'émission dérivés en temps représentent des *événements clairsemés.*

16. Commutateur TTE selon l'une des revendications 9 à 15, **caractérisé par le fait que** chaque message TT contient un *champ* de *paramètre* auquel est assignée la valeur VRAI ou FAUX par un expéditeur du message, et un message dans lequel le champ de paramètre contient la valeur VRAI étant copié par le commutateur TTE et étant envoyé au canal d'observation, et un message dans lequel le champ de paramètre contient la valeur FAUX n'étant pas envoyé au canal d'observation par le commutateur TTE.

17. Système informatique en temps réel comprenant une pluralité d'ordinateurs de noeud et de commutateurs TTE, comprenant au moins un commutateur TTE selon l'une des revendications 9 à 16.

18. Système informatique en temps réel selon la revendication 17, **caractérisé par le fait que** deux commutateurs TTE ou plus supportent des canaux d'observation, les canaux d'observation des commutateurs TTE étant liés à un ou plusieurs noeuds d'observation.

19. Architecture informatique distribuée en temps réel, **caractérisée par le fait que**, dans un système informatique distribué en temps réel selon l'une des revendications 17 ou 18, lequel est formé d'une pluralité d'ordinateurs de noeud et de commutateurs TTE, et dans lequel deux commutateurs TTE ou plus supportent des canaux d'observation, les canaux d'observation des commutateurs TTE sont liés à un ou plusieurs noeuds d'observation.
